# EUROPÄISCHE PATENTSCHRIFT

(11) **EP 1 761 427 B1**
(45) Veröffentlichungstag und Bekanntmachung des Hinweises auf die Patenterteilung: **14.11.2007**
(21) Anmeldenummer: 05751908.4
(22) Anmeldetag: 27.06.2005
(51) Int. Cl.: B62D 55/15, B62D 55/088

(54) **DICHTUNGSANORDNUNG UND GELENK EINER KETTE MIT DER DICHTUNGSANORDNUNG**
SEALING ARRANGEMENT AND LINK OF A CHAIN WITH SAID SEALING ARRANGEMENT
DISPOSITIF D'ETANCHEITE ET ARTICULATION D'UNE CHAINE AVEC CE DISPOSITIF D'ETANCHEITE

(30) Priorität: 30.06.2004 DE 102004031941
(43) Veröffentlichungstag der Anmeldung: 14.03.2007
(73) Patentinhaber: AB SKF, S-415 50 Göteborg (SE)
(72) Erfinder: VOM STEIN, Hans-Joachim, 51519 Odenthal (DE); KORTE, Wolfgang, 51069 Köln (DE); STOJEK, Marcus, 53804 Much (DE)
(74) Vertreter: Kohl, Thomas
(86) Internationale Anmeldenummer: PCT/EP2005/006882
(87) Internationale Veröffentlichungsnummer: WO 2006/002845

(56) Entgegenhaltungen:
- GB-A- 1 408 517
- US-A- 4 457 521

## Beschreibung

Die Erfindung betrifft eine Dichtungsanordnung zum Dichten zwischen einem ersten Teil einer Kette und einem zweiten, gegenüber dem ersten wenigstens verschwenkbaren Teil der Kette und ein Gelenk einer Kette mit der Dichtungsanordnung.

Bei Ketten insbesondere von Kettenfahrzeugen sind üblicherweise die Glieder der Kette über Drehzapfengelenke miteinander verbunden. Dabei umfasst ein derartiges Drehzapfengelenk einen Bolzen und eine Hülse, die drehbar über den Bolzen aufgeschoben ist, wobei an den Enden des Bolzens und der Hülse jeweils Glieder der Kette aufgepresst sind. Die Drehlageroberflächen zwischen dem Bolzen und der Hülse werden durch eine Ölkammer im Bolzen geschmiert, wobei der Ölraum zwischen Bolzen und Hülse durch zwei Dichtelemente abgedichtet wird, die gegen die Stirnflächen der Hülse drückende Dichtlippen umfassen.

Beispielsweise aus der DE 27 26 033 A1 ist eine Kettenbolzenanordnung mit einer Dichtung bekannt, wobei die Kettenbolzenanordnung einen Kettenbolzen mit einem am Kettenbolzen befestigten Teil eines ersten Kettenglieds und eine einen Teil des Kettenbolzens umgebende, gegenüber dem Kettenbolzen hin und her bewegbare Buchse mit einem an der Buchse befestigten Teil eines zweiten Kettenglieds umfasst. Weiterhin umfasst die Kettenbolzenanordnung eine im ersten Kettenglied eingebrachte Einsenkung zur Aufnahme der Dichtung, die mit ihrer Dichtlippe zum Anliegen an einer Stirnseite der Buchse vorgesehen ist, und einen Abstandsring, der den Kettenbolzen umgibt, sich in Achsrichtung zwischen einer Stirnfläche der Einsenkung und der Stirnfläche der Buchse erstreckt und dessen äußere Umfangsfläche zusammen mit der Stirnfläche der Buchse und der Einsenkung einen Hohlraum zur Aufnahme der Dichtung bildet. Dabei umfasst die in den Hohlraum eingelegte Dichtung einen Hauptdichtring aus einem verhältnismäßig steifen, aber elastischen ersten elastomeren Material und ein Hilfsdichtungselement aus einem zweiten elastischen elastomeren Material, das wesentlich weniger steif ist als das erste Material.

Aus der US 4,607,854 ist eine Dichtungsanordnung für ein Kettendrehzapfengelenk bekannt, bei dem ein erster Ring aus einem flexiblen elastomeren Material aufweisend einen hülsenartigen Teil und einen flanschartigen Teil mit einer Dichtlippe und ein zweiter, den ersten berührender Ring aus elastischem Material zum Abdichten eines Raums zwischen einem Bolzen und einer den Bolzen umgebenden Hülse vorgesehen sind. Dabei umfasst der erste Ring einen zylindrischen, metallischen Versteifungsring, der vollständig im hülsenartigen Teil des ersten Rings eingebettet ist.

Das Dokument US4457521 beschreibt eine Dichtungsanordnung mit drei Elementen: Ein Dichtring mit Dichtlippe, ein Elastikring zum Druckausüben auf den Dichtring und ein zwischen dem Dichtring und dem Elastikring angeordneter Stützring.

Eine Aufgabe der Erfindung ist es, eine Dichtungsanordnung zum Dichten zwischen einem ersten Teil einer Kette und einem zweiten, gegenüber dem ersten wenigstens verschwenkbaren Teil der Kette zu schaffen, die insbesondere eine lange Lebensdauer aufweist.

Die Aufgabe wird durch den Gegenstand des Anspruchs 1 gelöst. Vorteilhafte Ausgestaltungen sind in den Unteransprüchen beschrieben.

Gemäß Anspruch 1 beinhaltet eine Dichtungsanordnung zum Dichten zwischen einem ersten Teil einer Kette und einem zweiten, gegenüber dem ersten wenigstens verschwenkbaren Teil der Kette folgende Merkmale:
- Ein Dichtring mit einer ringförmigen Dichtlippe zum Abdichten eines Schmiermittelraums zwischen den gegeneinander verschwenkbaren Teilen,
- ein Elastikring zum festen Anliegen an einem der Teile und Druckausüben auf den Dichtring und
- ein zwischen dem Dichtring und dem Elastikring angeordneter Stützring.

Die Erfindung beruht dabei auf der Erkenntnis, dass bei einer herkömmlichen Dichtungsanordnung, bei der der Elastikring unmittelbar mit dem Dichtring zusammenwirkt, der Elastikring beim Einbau derart bestimmungsgemäß verformt wird, dass er sowohl in axialer als auch in radialer Richtung Kräfte erzeugt, wobei die radial wirkenden Kräfte nach einer gewissen Zeit bewirken, dass der Dichtring durch Kriecheffekte derart auf seine zylindermantelartige Gegenfläche am Bolzen oder Distanzring gedrückt wird, so dass die Dichtungsanordnung unbeweglich wird und axiale Toleranzen nicht mehr auszugleichen vermag, was letztendlich Undichtigkeiten hervorruft. Ein weiterer dazu beitragender Effekt ist die Verformung des Dichtrings, die bei Axialbewegungen des Bolzens bzw. des Distanzrings in Folge der radial wirkenden Kräfte in Verbindung mit der Reibung des Dichtrings auf dem Bolzen bzw. dem Distanzring entsteht. Durch die Erfindung werden vorgenannter nachteilige Auswirkungen vermieden, indem zwischen Dichtring und Elastikring ein Stützring eingelegt ist, mit dem die hohen radialen Kräfte abgefangen werden.

Dadurch, dass der Stützring einfach bei der Montage zwischen dem Dichtring und dem Elastikring gelegt wird, ist die gesamte Dichtungsanordnung einfach und damit kostengünstig herstellbar. Mit der erfindungsgemäßen Dichtungsanordnung wird dabei gegenüber vergleichbaren konventionellen Dichtungsanordnungen bei in etwa gleichbleibenden oder sogar niedrigeren Herstellungskosten eine deutlich höhere Lebensdauer erzielt.

In einer vorteilhaften Ausgestaltung sind der Stützring, der Elastikring und der Dichtring derart aufeinander abgestimmt gestaltet, dass der Elastikring zusammen mit dem Dichtring den Stützring nach außen hin abdichtet. Dadurch wird mit Vorteil ein Vordringen von Feuchtigkeit von außen her zum Stützring verhindert, so dass der Stützring insbesondere in der Ausbildung als ein Metallring vor Korrosion geschützt ist.

In einer vorteilhaften Ausgestaltung ist der Elastikring eine ringartige Dichtlippe ausbildend gestaltet, die bei einem bestimmungsgemäßen Verformen des Elastikrings bei Betrachtung von außen her der Dichtlippe des Dichtrings vorgelagert zum Anliegen an einem der Teile der Kette vorgesehen ist. Dadurch wird mit Vorteil ein Vordringen von Verschmutzungen von außen her in Richtung der Dichtlippe des Dichtrings verhindert.

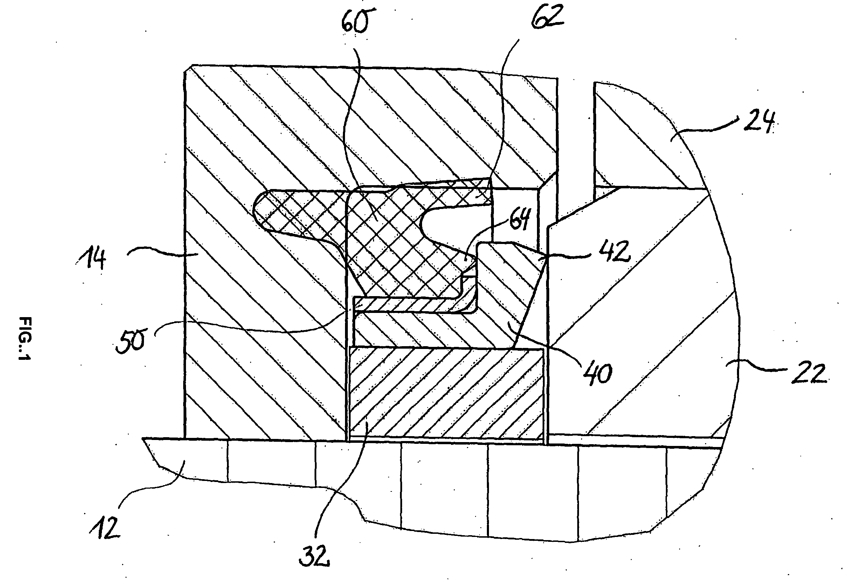

Weitere Vorteile, Merkmale und Einzelheiten der Erfindung ergeben sich aus dem nachfolgend beschriebenen Ausführungsbeispiel der Erfindung anhand der Figur.

Die Figur zeigt als ein Ausführungsbeispiel die Erfindung einem Längsschnitt durch eine Dichtungsanordnung zum Abdichten zwischen einem ersten Teil einer Kette und einem zweiten, gegenüber dem ersten wenigstens verschwenkbaren Teil der Kette. Die Figur zeigt dabei lediglich ausschnittsweise einen oberen äußerst linken Bereich des Längsschnitts, wobei der nicht dargestellte rechte Bereich bezüglich einer vertikalen Achse als Spiegelbild des dargestellten Bereichs gestaltet ist.

Das erste Teil der Kette umfasst dabei einen Bolzen 12 und ein äußeres Kettenglied 14, das mit einer seiner zylindrischen Bohrungen auf dem Bolzen 12 aufgepresst ist. Das zweite Teil der Kette umfasst eine mit radialem Spiel über den Bolzen 12 aufgeschobene und gegen den Bolzen 12 wenigstens verschwenkbare Hülse 22 und ein inneres Kettenglied 24, das mit einer seiner zylindrischen Bohrungen auf der Hülse 22 aufgepresst ist. Weiterhin ist mit Axialspiel zwischen dem äußeren Kettenglied 14 und der Hülse 22 ein über den Bolzen 12 aufgeschobener Distanzring 32 mit Radialspiel angeordnet.

Über den Distanzring 32 ist ein Dichtring 40 geschoben, der zum Abdichten des sich im wesentlichen zwischen dem Außenmantel des Bolzens 12 und dem Innenmantel der Hülse 22 erstreckenden, mit Öl befüllten Raums eine Dichtlippe 42 ausbildend gestaltet ist, die bestimmungsgemäß an der Stirnfläche der Hülse 22 dichtend anliegt. Weiterhin liegt der Dichtring 40 großflächig am Außenmantel des Distanzrings 32 an und ist im wesentlichen L-förmige Querschnittsflächen bildend gestaltet. In Richtung zum äußeren Kettenglied 14 hin schließt sich an den Dichtring 40 ein entsprechend eingelegter Stützring 50, beispielsweise aus einem Metall an, der ebenfalls im wesentlichen L-förmige Querschnittsflächen bildend gestaltet ist. An den Stützring 50 anschließend ist schließlich ein Elastikring 60 eingelegt, der im unverformten Zustand im wesentlichen Y-förmige Querschnittsflächen bildend gestaltet ist.

Der Dichtring 40 umfasst dabei ein elastomeres Material, insbesondere Polyurethan, und kann faserverstärkt ausgebildet sein. Der Elastikring 60 umfasst ebenfalls ein elastomeres Material, insbesondere Gummi, und ist gegenüber dem Dichtring 40 weniger steif. Der metallene Stützring 50 ist dabei deutlich steifer als der Dichtring 40 und der Elastikring 60.

Der radial äußere, axial nach innen gerichtete Ast der Y-Form des Elastikrings 60 ist zum Ausbilden einer der Dichtlippe 42 des Dichtrings 40 von außen her betrachtet vorgelagerten Dichtlippe 62 ausgebildet, die mit einem bestimmungsgemäßen Verformen des Elastikrings 60 zum Anliegen an der Stirnfläche der Hülse 22 vorgesehen ist.

Um ein Korrodieren des metallenen Stützrings 50 durch von außen her eindringende Feuchtigkeit zu unterbinden, sind der Stützring 50, der Elastikring 60 und der Dichtring 40 derart aufeinander abgestimmt gestaltet, dass sich der Stützring 50 im Fußbereich der L-Form weniger weit radial nach außen erstreckt als der Dichtring 40 und der Elastikring 60 ist eine in axialer Richtung auskragende weitere ringförmige Dichtlippe 64 ausbildend gestaltet, die zum dichtenden Anliegen an einer Stirnfläche des Dichtrings 40 vorgesehen ist, um somit den Stützring 50 gegenüber Einflüssen von außen abzudichten.

In der Figur sind dabei das erste und zweite Teil der Kette und der Distanzring 32 bestimmungsgemäß montiert dargestellt, wohingegen insbesondere der Elastikring 60 aber auch der Dichtring 40 in einem noch unverformten, sich vor dem Zusammenschieben der beiden Teile der Kette einstellenden Zustand dargestellt sind. Sind die beiden Teile der Kette, wie in der Figur dargestellt, bestimmungsgemäß montiert, so wird der Elastikring 60 stark verformt, wodurch der Elastikring 60 dicht am äußeren Kettenglied 14 anliegt, gleichzeitig über den Stützring 50 den Dichtring 40 mit seinem Innenmantel an den Außenmantel des Distanzrings 32 und die Dichtlippe 42 gegen die Stirnfläche der Hülse 22 drückt. Weiterhin wird dadurch die Dichtlippe 62 des Elastikrings 60 gegen die Stirnfläche der Hülse 22 und die weitere Dichtlippe 64 des Elastikrings 60 gegen den Dichtring 40 gedrückt.

### Bezugszeichenliste

- 12: Bolzen
- 14: äußeres Kettenglied

- 22: Hülse
- 24: inneres Kettenglied

- 32: Distanzring

- 40: Dichtring
- 42: Dichtlippe des Dichtrings

- 50: Stützring

- 60: Elastikring
- 62: Dichtlippe des Elastikrings
- 64: weitere Dichtlippe des Elastikrings

## Patentansprüche

1. Dichtungsanordnung zum Dichten zwischen einem ersten Teil einer Kette und einem zweiten, gegenüber dem ersten wenigstens verschwenkbaren Teil der Kette, beinhaltend folgende Merkmale:
- Ein Dichtring (40) mit einer ringförmigen Dichtlippe zum Abdichten eines Schmiermittelraums zwischen den gegeneinander verschwenkbaren Teilen,
- ein Elastikring (60) zum festen Anliegen an einem der Teile und Druckausüben auf den Dichtring und
**gekennzeichnet durch**
- ein zwischen dem Dichtring und dem Elastikring derart angeordneter und ausgebildeter Stützring (50), dass der Stützring im Bereich des Druckausübens in radialer Richtung ein unmittelbares Berühren von Elastikring und Dichtring im wesentlichen verhindert.

2. Dichtungsanordnung nach Anspruch 1, wobei der Stützring (50) als ein beim Zusammenbau der Dichtungsanordnung zwischen dem Dichtring (40) und dem Elastikring (60) einzulegender Ring ausgebildet ist.

3. Dichtungsanordnung nach einem der Ansprüche 1 oder 2, wobei der Elastikring eine ringartige Dichtlippe (62) ausbildend gestaltet ist, die bei einem bestimmungsgemäßen Verformen des Elastikrings bei Betrachtung von außen her der Dichtlippe des Dichtrings vorgelagert zum Anliegen an einem der Teile der Kette vorgesehen ist.

4. Dichtungsanordnung nach einem der Ansprüche 1 bis 3, wobei der Elastikring in einem unverformten Zustand mit in etwa Y-förmigen Längsschnittsflächen ausgebildet ist.

5. Dichtungsanordnung nach Anspruch 4, wobei die Dichtlippe des Elastikrings ein radial äußerer, axial nach innen hin gerichteter Ast der Y-Form ist.

6. Dichtungsanordnung nach einem der Ansprüche 1 bis 5, wobei der Stützring (50), der Elastikring (60) und der Dichtring (40) derart aufeinander abgestimmt gestaltet sind, dass der Elastikring zusammen mit dem Dichtring den Stützring nach außen hin abdichten.

7. Dichtungsanordnung nach einem der Ansprüche 1 bis 6, wobei der Dichtring und/oder der Stützring mit in etwa L-förmigen Längsschnittsflächen ausgebildet sind.

8. Dichtungsanordnung nach Anspruch 7, wobei sich der Stützring für die Abdichtung nach außen hin im Fußbereich der L-Form weniger weit radial nach außen erstreckt als der Dichtring und der Elastikring zum Anliegen am Dichtring eine in axialer Richtung auskragende weitere ringförmige Dichtlippe (42) ausbildend gestaltet ist.

9. Dichtungsanordnung nach einem der Ansprüche 1 bis 8, wobei das erste Teil der Kette einen Bolzen (12) und wenigstens ein auf einem Ende des Bolzens aufgepresstes äußeres Kettenglied (14) und der zweite Teil der Kette eine auf den Bolzen aufgeschobene, auf dem Bolzen wenigstens verschwenkbare Hülse (22) und wenigstens ein auf ein Ende der Hülse aufgepresstes inneres Kettenglied (24) umfassen.

10. Dichtungsanordnung nach Anspruch 9, wobei zwischen dem äußeren Kettenglied und der Hülse auf dem Bolzen ein Distanzring (32) geordnet ist.

11. Dichtungsanordnung nach einem der Ansprüche 9 oder 10, wobei die Dichtlippe (42) des Dichtrings und/oder des Elastikrings zum Anliegen an einer Stirnseite der Hülse vorgesehen sind.

12. Dichtungsanordnung nach einem der Ansprüche 10 oder 11, wobei ein Innenmantel des Dichtrings zum Anordnen auf einem Außenmantel des Distanzrings vorgesehen ist.

13. Dichtungsanordnung nach einem der Ansprüche 9 bis 12, wobei der Elastikring für ein großflächiges Anliegen am äußeren Kettenglied vorgesehen ist.

14. Dichtungsanordnung nach einem der Ansprüche 1 bis 13, wobei der Dichtring steifer als der Elastikring ausgebildet ist.

15. Dichtungsanordnung nach einem der Ansprüche 1 bis 14, wobei der Stützring steifer als der Elastikring und/oder der Dichtring, insbesondere umfassend ein Metall, ausgebildet ist.

16. Dichtungsanordnung nach einem der Ansprüche 1 bis 15, wobei der Dichtring ein elastomeres Material, insbesondere Polyurethan umfasst.

17. Dichtungsanordnung nach einem der Ansprüche 1 bis 16, wobei der Elastikring ein elastomeres Material, insbesondere Gummi, umfasst.

18. Dichtungsanordnung nach einem der Ansprüche 1 bis 17, wobei das Schmiermittel ein Öl umfasst.

19. Gelenk einer Kette mit einer Dichtungsanordnung nach einem der Ansprüche 1 bis 18.

## Claims

1. A sealing assembly for sealing between a first part of a chain and a second part of the chain, which is at least pivotable relative to the first part, comprising the following features:
- a sealing ring (40) with an annular sealing lip for sealing a lubricant chamber between the parts which are pivotable relative to one another,
- an elastic ring (60) for firm application against one of the parts and for exerting pressure on the sealing ring, and
**characterised by**
- a supporting ring (50) disposed and formed between the sealing ring and elastic ring in such a way that in the zone in which pressure is exerted in a radial direction the supporting ring substantially prevents direct contact of the elastic ring and the sealing ring.

2. A sealing assembly according to Claim 1, wherein the supporting ring (50) is in the form of a ring to be inserted between the sealing ring (40) and the elastic ring (60) when the sealing assembly is being assembled.

3. A sealing assembly according to either Claim 1 or Claim 2, wherein the elastic ring is designed to form an annular sealing lip (62) which, with a given deformation of the elastic ring, is provided outboard, when viewed from the exterior the sealing lip of the sealing ring, for application against one of the parts of the chain.

4. A sealing assembly according to any one of Claims 1 to 3, wherein in an undeformed state the elastic ring is formed with approximately Y-shaped longitudinal sectional areas.

5. A sealing assembly according to Claim 4, wherein the sealing lip of the elastic ring is a radially outer, axially inwardly directed branch of the Y shape.

6. A sealing assembly according to any one of Claims 1 to 5, wherein the supporting ring (50), the elastic ring (60) and the sealing ring (40) are so shaped to match one another that the elastic ring together with the sealing ring seal the supporting ring from the outside.

7. A sealing assembly according to any one of Claims 1 to 6, wherein the sealing ring and/or the supporting ring is/are formed with approximately L-shaped longitudinal sectional areas.

8. A sealing assembly according to Claim 7, wherein the supporting ring for sealing from the outside in the base zone of the L-shape extends radially outwards to a lesser extent than the sealing ring, and the elastic ring, for application against the sealing ring, is shaped so as to form an axially projecting further annular sealing ring (42).

9. A sealing assembly according to any one of Claims 1 to 8, wherein the first part of the chain comprises a stud (12) and at least one outer chain link (14) pressed on to one end of the stud, and the second part of the chain comprises a sleeve (22) which is pushed on to the stud and which is at least pivotable on the stud, and at least one inner chain link (24) pressed on to one end of the sleeve.

10. A sealing assembly according to Claim 9, wherein a spacer ring (32) is arranged on the stud between the outer chain link and the sleeve.

11. A sealing assembly according to either Claim 9 or Claim 10, wherein the sealing lip (42) of the sealing ring and/or of the elastic ring is/are provided for application against one end face of the sleeve.

12. A sealing assembly according to either Claim 10 or Claim 11, wherein an inner circumference of the sealing ring is provided to be mounted on an outer circumference of the spacer ring.

13. A sealing assembly according to any one of Claims 9 to 12, wherein the elastic ring is provided so as to be applied over a large area against the outer chain link.

14. A sealing assembly according to any one of Claims 1 to 13, wherein the sealing ring is designed to be more rigid than the elastic ring.

15. A sealing assembly according to any one of Claims 1 to 14, wherein the supporting ring is designed to be more rigid than the elastic ring and/or the sealing ring, and in particular comprises a metal.

16. A sealing assembly according to any one of Claims 1 to 15, wherein the sealing ring comprises an elastomeric material, in particular polyurethane.

17. A sealing assembly according to any one of Claims 1 to 16, wherein the elastic ring comprises an elastomeric material, in particular rubber.

18. A sealing assembly according to any one of Claims 1 to 17, wherein the lubricant comprises an oil.

19. A link of a chain with a sealing assembly according to any one of Claims 1 to 18.

## Revendications

1. Dispositif d'étanchéité pour assurer l'étanchéité entre un premier élément d'une chaîne et un second élément de ladite chaîne pouvant au moins pivoter par rapport au premier, présentant les caractéristiques suivantes:
- une bague d'étanchéité (40) pourvue d'une lèvre d'étanchéité annulaire assurant l'étanchéité d'une chambre à lubrifiant entre les éléments pouvant pivoter l'un par rapport à l'autre,
- une bague élastique (60) qui est montée fixe sur l'un des éléments et exerce une pression sur la bague d'étanchéité,
- **caractérisé par**
- une bague d'appui (50) qui est placée entre la bague d'étanchéité et la bague élastique et conformée d'une manière telle que, dans la région où s'exerce la pression, la bague d'appui empêche dans une large mesure un contact direct entre la bague élastique et la bague d'étanchéité.

2. Dispositif d'étanchéité selon la revendication 1, dans lequel la bague d'appui (50) est réalisée sous la forme d'une bague à insérer entre la bague d'étanchéité (40) et la bague élastique (60) lors du montage du dispositif d'étanchéité.

3. Dispositif d'étanchéité selon une des revendications 1 ou 2, dans lequel la bague élastique est conformée avec une lèvre d'étanchéité (62) annulaire qui, vu de l'extérieur, avec une déformation définie de la bague élastique, est située devant la lèvre d'étanchéité de la bague d'étanchéité et est prévue pour venir en contact avec un élément de la chaîne.

4. Dispositif d'étanchéité selon une des revendications 1 à 3, dans lequel la bague élastique, à l'état non déformé, vu en coupe longitudinale présente une section sensiblement en forme de Y.

5. Dispositif d'étanchéité selon la revendication 4, dans lequel la lèvre d'étanchéité de la bague élastique est une branche de la forme de Y située radialement à l'extérieur et tournée axialement vers l'intérieur.

6. Dispositif d'étanchéité selon une des revendications 1 à 5, dans lequel la bague d'appui (50), la bague élastique (60) et la bague d'étanchéité (40) sont mutuellement adaptées de telle sorte que la bague élastique et la bague d'étanchéité enferment la bague d'appui de manière étanche vis-à-vis de l'extérieur.

7. Dispositif d'étanchéité selon une des revendications 1 à 6, dans lequel la bague d'étanchéité et/ou la bague d'appui, vu en coupe longitudinale, ont sensiblement une forme de L.

8. Dispositif d'étanchéité selon la revendication 7, dans lequel la bague d'appui, pour l'étanchéité vis-à-vis de l'extérieur, au niveau du pied de la forme de L présente une longueur radiale en direction l'extérieur inférieure à la bague d'étanchéité et la bague élastique pour le contact avec la bague d'étanchéité comporte une lèvre d'étanchéité (42) annulaire supplémentaire saillante dans la direction axiale.

9. Dispositif d'étanchéité selon une des revendications 1 à 8, dans lequel le premier élément de la chaîne comprend un axe (12) et au moins un patin (14) extérieur emmanché sur une extrémité de l'axe et le second élément de la chaîne comprend une douille (22) enfilée sur l'axe qui peut au moins pivoter sur l'axe, et au moins un patin de chaîne (24) intérieur emmanché sur une extrémité de la douille.

10. Dispositif d'étanchéité selon la revendication 9, dans lequel une bague d'espacement (32) est placée sur l'axe, entre le patin de chaîne extérieur et la douille.

11. Dispositif d'étanchéité selon une des revendications 9 ou 10, dans lequel la lèvre d'étanchéité (42) de la bague d'étanchéité et/ou de la bague élastique est/sont prévue(s) pour venir en appui contre une face frontale de la douille.

12. Dispositif d'étanchéité selon une des revendications 10 ou 11, dans lequel une surface intérieure de la bague d'étanchéité est prévue pour se monter sur une surface extérieure de la bague d'espacement.

13. Dispositif d'étanchéité selon une des revendications 9 à 12, dans lequel la bague élastique est prévue pour être en contact sur une grande surface avec le patin de chaîne extérieur.

14. Dispositif d'étanchéité selon une des revendications 1 à 13, dans lequel la bague d'étanchéité présente une rigidité supérieure à celle de la bague élastique.

15. Dispositif d'étanchéité selon une des revendications 1 à 14, dans lequel la bague d'appui présente une rigidité supérieure à celle de la bague élastique et/ou de la bague d'étanchéité, et notamment comprend un métal.

16. Dispositif d'étanchéité selon une des revendications 1 à 15, dans lequel la bague d'étanchéité comprend un matériau élastomère, notamment du polyuréthane.

17. Dispositif d'étanchéité selon une des revendications 1 à 16, dans lequel la bague élastique comprend un matériau élastomère, notamment du caoutchouc.

18. Dispositif d'étanchéité selon une des revendications 1 à 17, dans lequel le lubrifiant est une huile.

19. Articulation d'une chaîne comportant un dispositif d'étanchéité selon une des revendications 1 à 18.
